# EUROPEAN PATENT SPECIFICATION

(11) **EP 3 465 081 B1**
(45) Date of publication and mention of the grant of the patent: **29.01.2020**
(21) Application number: 17777994.9
(22) Date of filing: 22.05.2017
(51) Int. Cl.: G01B 11/26, B21D 5/00, B21D 5/14, B21D 7/08, B21D 7/14

(54) **BENDING ANGLE MEASUREMENT SYSTEM**
SYSTEM ZUR NEIGUNGSWINKELMESSUNG
SYSTÈME DE MESURE D'ANGLE DE PLIAGE

(30) Priority: 25.05.2016 TR 201606971
(43) Date of publication of application: 10.04.2019
(73) Proprietor: Durmazlar Makina Sanayi Ve Ticaret Anonim Sirketi, Nilüfer Bursa (TR)
(72) Inventor: SERIFOGLU, Ferudun, Bursa (TR); SAGIR, Selcuk, Nilufer/Bursa (TR)
(74) Representative: Kaya, Erdem
(86) International application number: PCT/TR2017/050205
(87) International publication number: WO 2017/204764

(56) References cited:
- EP-A1- 2 719 475
- WO-A1-2005/005071
- US-A- 3 955 389

## Description

### TECHNICAL FIELD

The present invention relates to a bending angle measurement system for use in cylinder and profile bending machines and which determines the angle, formed during bending of metal sheet plates or profile types, by means distance measurement device and which checks said angle and which provides said angle to reach the desired angle.

### KNOWN STATE OF THE ART

In the present case, bending function in cylinder bending and profile bending machines is provided by means of the teaching method. First of all, the machine axes realize bending which is close to the target bending point, and afterwards, the formed bending angle is measured manually by means of angle measurement devices. The next action of the machine is determined in accordance with the measured angle, and the bending target is entered into the machine again. This process continues until the bending target (the desired bending angle) is provided. Since the materials used in bending can have very different characteristics, separate bending shall be realized for every material, and it shall be recorded to the database. This process is difficult, and at the same time, it leads to substantial time loss.

From WO2005/005071 A1 a bending machine is know comprising three laser distance sensors for measuring the bending radius of the object being bent.

Another bending method is to use specific formulas based on the geometry of the bending machine. However, the result of the bending process provided by means of said method may not be absolutely correct. Since said adjustments and formulas are provided by persons, error risk occurs during the bending process. Moreover, the methods used in the present art are realized based on the cases occurring as a result of pre-operation or repetitive operation.

As a result, because of all of the abovementioned problems and because the present solutions are insufficient on the subject, an improvement is required in the related technical field.

### OBJECT THE INVENTION

The object of the present invention is to eliminate the above mentioned disadvantages and to bring new advantages to the related technical field.

The main object of the present invention is to automatically measure the angle, formed during bending of metal sheet plates or profile types, by means of sensors. Another object of the present invention is to check whether the realized angle measurement has reached the desired bending angle.

Another object of the present invention is to continue the bending process if it is understood that the target has not been reached as a result of said check.

Another object of the present invention is to continue said check and bending processes until the target bending angle is reached.

A final and important object of the present invention is to realize the bending process with the desired angle automatically by means of sensors.

In order to realize all of the abovementioned objects, the present invention is a bending angle measurement system according to claim 1.

The structural and characteristic properties and all advantages of the present invention are going to be understood in a clearer manner thanks to the figures given below and thanks to the detailed description written by means of referring to these figures, and therefore, the evaluation shall be made by taking into consideration these figures and the detailed description.

### BRIEF DESCRIPTION OF THE FIGURES

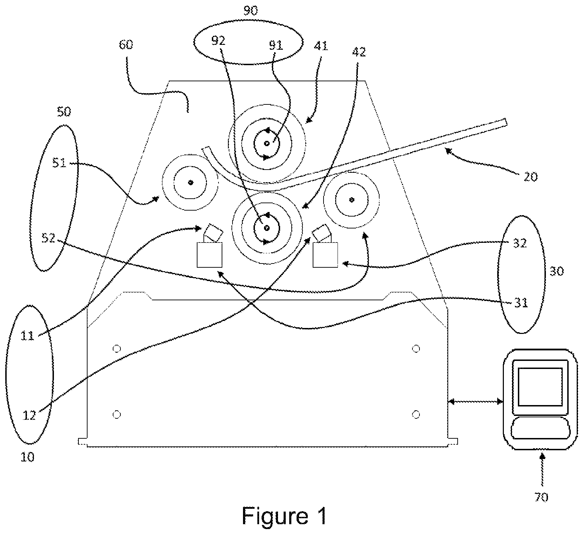

In Figure 1, a frontal view of the preferred embodiment of the subject matter system is given.

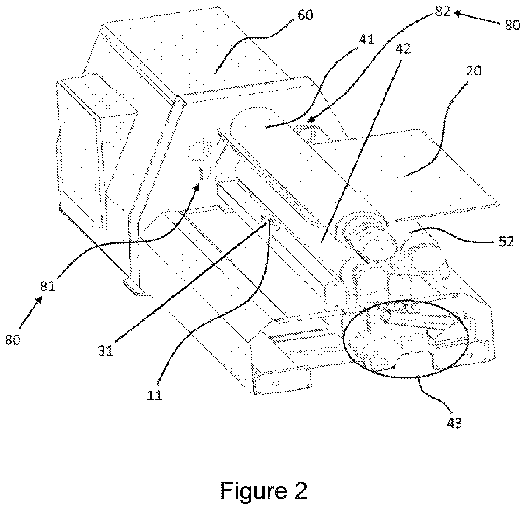

In Figure 2, a perspective view of the preferred embodiment of the subject matter system is given.

The drawings shall not be scaled and the details which are not necessary for understanding the present invention may be omitted. Besides, the elements, which are at least substantially identical or which has at least substantially identical functions, are shown with the same number.

### REFERENCE NUMBERS

- 10.: Sensor
- 11.: Left sensor
- 12.: Right sensor
- 20.: Bending part
- 30.: Sensor connection
- 31.: Left sensor connection
- 32.: Right sensor connection
- 41.: Upper holder element
- 42.: Lower holder element
- 50.: Bending element
- 51.: Left bending element
- 52.: Right bending element
- 60.: Machine body
- 70.: Control device
- 80.: Bending guide
- 81.: Left bending guide
- 82.: Right bending guide
- 91.: Upper drive center
- 92.: Lower drive center

### DETAILED DESCRIPTION OF THE INVENTION

In this detailed description, the preferred embodiments of the present invention are explained with references to examples without forming any restrictive effect only in order to make the subject more understandable. First of all, the relative positions of the items of the preferred embodiment will be described and afterwards, the details and functions of said items will be described for providing understanding of the bending angle measurement system in a more comfortable manner. Finally, the operation of said system and the roles of said items inside the operation will be described.

The relative positions of the items in the preferred embodiment of said system are as follows:
- The left sensor (11) which is a sensor (10) is positioned in a close manner to the left section on the machine body (60).
- The right sensor (12) which is a sensor (10) is positioned in a close manner to the right section of the machine body (60).
- The bending part (20) is positioned so as to stay above the bending element (50) between the upper holder element (41) and the lower holder element (42).
- The sensor connection (30) is a mechanical part positioned between the sensor (10) and the machine body (60).
- The left sensor connection (31) which is a sensor connection (30) is positioned between the left sensor (11) and the machine body (60).
- The right sensor connection (32) which is a sensor connection (30) is positioned between the right sensor (12) and the machine body (60).
- The upper holder element (41) is connected to the machine body (60) so as to stay above the bending part (20).
- The lower holder element (42) is connected to the machine body (60) so as to stay under the bending part (20).
- The lower holder pusher (43) is positioned on the machine body (60) in a manner connected to the lower holder element (42).
- The left bending element (51) which is the bending element (50) is positioned at the left section of the machine body (60) and on the left bending guide (81).
- The right bending element (52) which is the bending element (50) is positioned at the right section of the machine body (60) and on the right bending guide (82).
- The control device (70) is connected to the machine body (60).
- The bending guide (80) is positioned on the machine body (60).
- The left bending guide (81), which is the bending guide (80), is positioned at the left section on the machine body (60).
- The right bending guide (82), which is the bending guide (80), is positioned at the right section on the machine body (60).
- The upper drive center (91) is positioned on the machine body (60) in a manner connected to the upper holder element (41).
- The lower drive center (92) is positioned on the machine body (60) in a manner connected to the lower holder element (42).

The details and functions of the items in the preferred embodiment of said system are as follows:
- The function of the left sensor (11) is to measure the distance between the bending part (20) and itself by means of laser rays as from the time when the bending part (20) begins bending when the bending process of the bending part (20) is to be realized by the left bending element (51).
- The function of the right sensor (12) is to measure the distance between the bending part (20) and itself by means of laser rays as from the time when the bending part (20) begins bending when the bending process of the bending part (20) is to be realized by the right bending element (52).
- The bending part (20) is the item placed between the upper holder element (41) and the lower holder element (42) in order to be bent at the desired angle by the user.
- The function of the sensor connection (30) is to fix the sensor (10) to the machine body (60).
- The function of the left sensor connection (31) is to fix the left sensor (11) to the machine body (60).
- The function of the right sensor connection (32) is to fix the right sensor (12) to the machine body (60).
- The function of the upper holder element (41) and the lower holder element (42) is to prevent the bending part (20), placed in between in order to be bent, from turning to the right-left around itself and is to provide moving forwardly-backwardly in the desired direction.
- The upper holder element (41) and the lower holder element (42) are preferably in cylindrical form.
- The function of the lower holder pusher (43) is to move the lower holder element (42) downwardly-upwardly with respect to the machine body (60) and is to tighten the bending part (20) in order to provide moving and bending thereof between the upper holder element (41) and the lower holder element (42).
- The function of the bending element (50) is to move on the machine body (60) and to bend the bending part (20). The bending element (50) is preferably in cylindrical form.
- The function of the left bending element (51) is to realize the bending process when the bending part (20) is placed to the machine from the right side and when the left side of the bending part (20) is to be bent.
- The function of the right bending element (52) is to realize the bending process when the bending part (20) is placed to the machine from the left side and when the right side of the bending part (20) is to be bent.
- The movements of the left bending element (51) and the right bending element (52) are determined in accordance with the bending angle value desired by the user by the control device (70), in the light of the data transferred from the sensors (10) to the control device (70).
- The function of the control device (70) is to transform the data received from the sensors (10) and to check whether it reaches the desired value, in order to provide the desired bending angle.
- The control device (70) controls the upper holder element (41), the lower holder element (42) and the bending element (50) in order to provide bending at the desired angle.
- The left bending guide (81) is the mechanism whereon the left bending element (51) moves in order to bend the bending part (20).
- The right bending guide (82) is the mechanism whereon the right bending element (52) moves in order to bend the bending part (20).
- The upper drive center (91) provides the upper holder element (41) to turn in its own axis.
- The lower drive center (92) provides the lower holder element (42) to turn in its own axis.
- The power required for operation of said system is met by the network line preferably by means of cables or by means of a power supply like accumulator, battery, etc.

The operation of the preferred embodiment of said system and the roles of the items in this operation are as follows:
- If the left sensor (11) or the bending direction are in the exactly opposite direction, the laser ray, exiting the right sensor (12), reflects back from the surface (from the bending part (20)) provided in the opposite and the related sensor (10) generates coordinates in the plane x.
- The control device (70), having the required software and calculation algorithms, transforms the coming coordinate information into angle by means of algorithms.
- While bending is realized, the control device (70) continuously calculates the bending angle in the light of the data coming from the sensor (10) and sends the bending angle information to the CNC unit of the cylinder machine.
- If the calculated angle values are greater than the desired value, the upper holder element (41) moves circularly by means of the upper drive center (91) and the lower holder element (42) moves circularly by means of the lower drive center (92) in their own axes in opposite directions, and the bending part (20) to be bent is brought to the start position.
- By means of the algorithm operating in the control device (70), a new bending position is calculated.
- In accordance with the new value calculated, the bending element (50) positions itself on the bending guide (80) according to the commands coming from the control device (70).
- The bending process is begun again, and this process is repeated until the bending angle of the bending part (20) is preferably +/-1 mm far from the desired angle value.

## Claims

1. A bending angle measurement system, for use in cylinder and profile bending machines and which determines the angle, formed during bending of bending part (20), by means distance measurement device and which checks said angle and which provides said angle to reach the desired angle and comprising the following items:
• machine body (60),
• upper holder element (41) and lower holder element (42) positioned on the machine body (60) and preventing rotation of the bending part (20) around the own axis thereof and providing movement of the bending part forwardly-backwardly in the desired direction,
• upper drive center (91) connected to the upper holder element (41) and providing rotation of the upper holder element (41) in the own axis thereof,
• lower drive center (92) provided inside the lower holder element (42) and providing rotation of the lower holder element (42) in the own axis thereof, the measurement system being arranged so that, when in use, the bending part (20) is positioned between the upper holder element (41) and the lower holder element (42) whereon the bending process is to be realized, the system further comprising
• at least one bending element (50) positioned on a bending guide (80) and which moves on the bending guide (80) and which bends the bending part (20),
• at least one bending guide (80) positioned on the machine body (60) and whereon the bending element (50) moves in order to bend the bending part (20); said bending angle measurement system comprising:
• at least one sensor (10) which measures the distance between said bending part (20) and itself by means of laser and which transfers measurement data to a control device (70),
• a control device (70) for performing the following steps:
∘ transforming said measurement data, transferred by the sensor (10), into angle value,
∘ checking whether the bending part (20) has reached the bending angle targeted by the user,
∘ checking the forward-backward movement of the bending part (20) between the upper holder element (41) and the lower holder element (42) by means of the movements of the upper drive center (91) and the lower drive center (92),
∘ adjusting the position of the bending element (50) on the bending guide (80) in order to provide reaching of the bending part (20) to the desired bending angle,
∘ providing repeating of the bending process until reaching the desired bending angle;
**characterized in that** said at least one sensor (10) comprises:
∘ a left sensor (11) provided on the left part of the machine body (60) left of the lower holder element (42) and which measures the distance between the bending part (20) and itself, by means of laser rays,
∘ a right sensor (12) provided on the right part of the machine body (60) right of the lower holder element (42) and which measures the distance between the bending part (20) and itself, by means of laser rays.

2. A system according to claim 1, wherein said sensor (10) comprises mechanical sensor connection (30) which provides fixation onto the machine body (60).

3. A system according to claim 1 or 2, wherein said sensor connection (30) is;
• left sensor connection (31) which fixes said left sensor (11) to the machine body (60),
• right sensor connection (32) which fixes said right sensor (12) to the machine body (60).

4. A system according to claim 1, wherein said bending element (50) is;
• a left bending element (51) placed on the left part of the machine body (60) and which bends the left side of the bending part (20) when the bending part (20) is placed to the machine from the right side,
• a right bending element (52) placed on the right part of the machine body (60) and which bends the right side of the bending part (20) when the bending part (20) is placed to the machine from the left side.

5. A system according to claim 1, wherein a lower holder pusher (43) is provided which is positioned on the machine body (60) in a manner connected to the lower holder element (42) and which moves the lower holder element (42) downwardly-upwardly in the vertical axis according to the machine body (60) in order to provide tightening of the bending part (20) and leaving free thereof.

6. A system according to claim 1, wherein said bending guide (80) is;
• a left bending guide (81) whereon the left bending element (51) moves in order to bend the bending part (20),
• a right bending guide (82) whereon the left bending element (51) moves in order to bend the bending part (20).

## Patentansprüche

1. Biegewinkelmesssystem zur Verwendung in Zylinder- und Profilbiegemaschinen, das den Winkel, der während des Biegens eines Biegeteils (20) gebildet wird, mittels einer Abstandsmessvorrichtung bestimmt, und das den Winkel prüft und den Winkel zum Erreichen des gewünschten Winkels bereitstellt, bestehend aus den folgenden Bestandteilen:
• ein Maschinenkörper (60),
• ein oberes Halterelement (41) und ein unteres Halterelement (42), die am Maschinenkörper (60) angebracht sind und eine Drehbewegung des Biegeteils (20) um dessen eigene Achse verhindern und eine Vorwärts- und Rückwärtsbewegung des Biegeteils in die gewünschte Richtung bewirken,
• eine obere Antriebsstelle (91), die mit dem oberen Halterelement (41) verbunden ist und eine Drehbewegung des oberen Halterelements (41) um dessen eigene Achse bewirkt,
• eine untere Antriebsstelle (92), die innerhalb des unteren Halterelements (42) angeordnet ist und eine Drehbewegung des unteren Halterelements (42) um dessen eigene Achse bewirkt, wobei das Messsystem so ausgestaltet ist, dass im Gebrauch das Biegeteil (20) sich zwischen dem oberen Halterelement (41) und dem unteren Halterelement (42) befindet, auf denen der Biegevorgang verwirklicht werden soll, wobei das System weiterhin folgendes umfasst:
• mindestens ein Biegeelement (50), das auf einer Biegeführung (80) gelagert ist und das sich auf der Biegeführung (80) bewegt und das Biegeteil (20) biegt,
• mindestens eine Biegeführung (80), die am Maschinenkörper (60) angeordnet ist und auf der sich das Biegeelement (50) bewegt, um das Biegeteil (20) zu biegen; wobei das Biegewinkelmesssystem weiterhin folgendes umfasst:
• mindestens ein Sensor (10), der mittels Laser den Abstand zwischen dem Biegeteil (20) und sich selbst misst und die Messdaten an eine Steuereinrichtung (70) überträgt,
• eine Steuereinrichtung (70) zum Durchführen folgender Verfahrensschritte:
∘ Umwandeln der vom Sensor (10) übertragenen Messdaten in einen Winkelwert,
∘ Prüfen, ob der Biegeteil (20) den vom Benutzer angestrebten Biegewinkel erreicht hat,
∘ Überprüfen der Vorwärts- und Rückwärtsbewegung des Biegeteils (20) zwischen dem oberen Halterelement (41) und dem unteren Halterelement (42) anhand der Bewegungen der oberen Antriebsstelle (91) und der unteren Antriebsstelle (92),
∘ Einstellen der Position des Biegeelements (50) auf der Biegeführung (80), so dass der Biegeteil (20) den gewünschten Biegewinkel erreichen kann,
∘ Wiederholen des Biegevorgangs bis zum Erreichen des gewünschten Biegewinkels;
**dadurch gekennzeichnet, dass** das mindestens eine Sensor (10)
∘ einen linken Sensor (11), der am linken Teil des Maschinenkörpers (60) links vom unteren Halterelement (42) vorgesehen ist und den Abstand zwischen dem Biegeteil (20) und sich selbst anhand von Laserstrahlen misst, und
∘ einen rechten Sensor (12), der am rechten Teil des Maschinenkörpers (60) rechts vom unteren Halterelement (42) vorgesehen ist und den Abstand zwischen dem Biegeteil (20) und sich selbst anhand von Laserstrahlen misst, umfasst.

2. System nach Anspruch 1, wobei der Sensor (10) einen mechanischen Sensoranschluss (30) umfasst, die eine Befestigung auf dem Maschinenkörper (60) ermöglicht.

3. System nach Anspruch 1 oder 2, wobei die Sensoranschluss (30) als:
• ein linker Sensoranschluss (31), der den linken Sensor (11) am Maschinenkörper (60) befestigt,
• ein rechter Sensoranschluss (32), der den rechten Sensor (12) am Maschinenkörper (60) befestigt,
ausgestaltet ist.

4. System nach Anspruch 1, wobei das Biegeelement (50) als:
• ein linkes Biegeelement (51), das am linken Teil des Maschinenkörpers (60) angeordnet ist und die linke Seite des Biegeteils (20) biegt, wenn das Biegeteil (20) von rechts in die Maschine eingeführt wird,
• ein rechtes Biegeelement (52), das an dem rechten Teil des Maschinenkörpers (60) angeordnet ist und die rechte Seite des Biegeteils (20) biegt, wenn das Biegeteil (20) von links in die Maschine eingeführt wird,
ausgestaltet ist.

5. System nach Anspruch 1, wobei ein unterer Halterschieber (43) vorgesehen ist, der am Maschinenkörper (60) in einer mit dem unteren Halterelement (42) verbundenen Weise angeordnet ist und das untere Halterelement (42) auf einer vertikalen Achse entsprechend dem Maschinenkörper (60) auf- und abwärts bewegt, so dass das Biegeteil (20) festgespannt bzw. freigelassen werden kann.

6. System nach Anspruch 1, wobei die Biegeführung (80) als:
• eine linke Biegeführung (81), auf der sich das linke Biegeelement (51) bewegt, um das Biegeteil (20) zu biegen,
• eine rechte Biegeführung (82), auf der sich das linke Biegeelement (51) bewegt, um das Biegeteil (20) zu biegen,
ausgestaltet ist.

## Revendications

1. Système de mesure d'angle de pliage, destiné à être utilisé dans des machines de pliage de cylindres et de profilés et qui détermine l'angle, formé lors du pliage de la partie de pliage (20), au moyen d'un dispositif de mesure de distance et qui vérifie ledit angle et qui fournit ledit angle pour atteindre l'angle souhaité et comprenant les éléments suivants:
• corps de machine (60)
• élément de support supérieur (41) et élément de support inférieur (42) positionnés sur le corps de machine (60) et empêchant la rotation de la partie de pliage (20) autour du propre axe et assurant un mouvement de la partie cintrée vers l'avant-arrière dans la direction souhaitée,
• centre d'entraînement supérieur (91) connecté à l'élément de support supérieur (41) et assurant la rotation de l'élément de support supérieur (41) dans son propre axe,
• centre d'entraînement inférieur (92) prévu à l'intérieur de l'élément de support inférieur (42) et assurant la rotation de l'élément de support inférieur (42) dans son propre axe, le système de mesure étant arrangé de sorte que, lors de son utilisation, la partie de pliage (20) est positionnée entre l'élément de support supérieur (41) et l'élément de support inférieur (42) sur lequel le processus de pliage doit être réalisé.
• au moins un élément de pliage (50) positionné sur un guide de pliage (80) et qui se déplace sur le guide de pliage (80) et qui plie la partie de pliage (20),
• au moins un guide de pliage (80) positionné sur le corps de machine (60) et sur lequel l'élément de pliage (50) se déplace pour plier la partie de pliage (20);
ledit système de mesure d'angle de flexion comprend:
• au moins un capteur (10) qui mesure la distance entre ladite partie de pliage (20) et elle-même au moyen d'un laser et qui transfère les données de mesure à un dispositif de contrôle (70),
• un dispositif de contrôle (70) effectue les étapes suivantes:
∘ transformer lesdites données de mesure, transférées par le capteur (10), en valeur angulaire,
∘ vérifier si la partie de pliage (20) a atteint l'angle de pliage visé par l'utilisateur,
∘ contrôler le mouvement d'avant-arrière de la partie de pliage (20) entre l'élément de support supérieur (41) et l'élément de support inférieur (42) au moyen des mouvements du centre d'entraînement supérieur (91) et du centre d'entraînement inférieur (92),
∘ ajuster la position de l'élément de pliage (50) sur le guide de pliage (80) pour permettre d'atteindre la partie de pliage (20) à l'angle de pliage souhaité,
∘ ∘ assurer la répétition du processus de pliage jusqu'à atteindre l'angle de pliage souhaité;
**caractérisé en ce que** ledit au moins un capteur (10) comprend:
∘ un capteur gauche (11) prévu sur la partie gauche du corps de machine (60) à gauche de l'élément de support inférieur (42) et qui mesure la distance entre la partie de pliage (20) et elle-même, au moyen des rayons laser,
∘ un capteur droit (12) prévu sur la partie droite du corps de machine (60) à droite de l'élément de support inférieur (42) et qui mesure la distance entre la partie de pliage (20) et elle-même, au moyen des rayons laser.

2. Système selon la revendication 1, dans lequel ledit capteur (10) comprend une connexion de capteur mécanique (30) qui assure la fixation sur le corps de machine (60).

3. Système selon les revendications 1 ou 2, dans lequel ladite connexion de capteur (30) est;
• connexion du capteur gauche (31) qui fixe ledit capteur gauche (11) au corps de machine (60).
• connexion du capteur droit (32) qui fixe ledit capteur droit (12) au corps de machine (60).

4. Un système selon la revendication 1, dans lequel ledit élément de pliage (50) est;
• un élément de pliage gauche (51) placé sur la partie gauche du corps de machine (60) et qui plie le côté gauche de la partie de pliage (20) lorsque la partie de pliage (20) est placée sur la machine par le côté droit,
• un élément de pliage droit (52) placé sur la partie droite du corps de machine (60) et qui plie le côté droit de la partie de pliage (20) lorsque la partie de pliage (20) est placée sur la machine par le côté gauche.

5. Un système selon la revendication 1, dans lequel est prévu un poussoir de support inférieur (43) qui est positionné sur le corps de machine (60) d'une manière reliée à l'élément de support inférieur (42), et qui déplace l'élément de support inférieur (42) vers le bas et vers le haut dans l'axe vertical selon le corps de machine (60) pour d'assurer le serrage de la partie de pliage (20) et de la laisser libre.

6. Un système selon la revendication 1, dans lequel ledit guide de pliage (80) est;
• un guide de pliage gauche (81) sur lequel l'élément de pliage gauche (51) se déplace pour plier la partie de pliage (20),
• un guide de pliage droit (82) sur lequel l'élément de pliage gauche (51) se déplace pour plier la partie de pliage (20).
